# EUROPEAN PATENT APPLICATION

(11) **EP 2 749 543 A1**
(43) Date of publication of application: **02.07.2014**
(21) Application number: 12826046.0
(22) Date of filing: 23.08.2012
(51) Int. Cl.: C03B 23/02, C03B 23/035, G02B 3/00

(54) **OPTICAL ELEMENT MANUFACTURING METHOD AND MANUFACTURING DEVICE**

(30) Priority: 25.08.2011 JP 2011183976
(71) Applicant: Asahi Glass Company, Limited, Chiyoda-ku Tokyo 100-8405 (JP)
(72) Inventor: HASHITANI, Naoki, Tokyo 100-8405 (JP); HORIUCHI, Kohei, Tokyo 100-8405 (JP); HIRANO, Naomi, Tokyo 100-8405 (JP); FUNATSU, Shiro, Tokyo 100-8405 (JP)
(74) Representative: Müller-Boré & Partner Patentanwälte PartG mbB
(86) International application number: PCT/JP2012/071363
(87) International publication number: WO 2013/027808

(57) **Abstract**

The present invention provides an optical element manufacturing method and manufacturing device capable of forming a smooth optical surface shape without reflecting surface roughness of a molding die. The optical element manufacturing device 1 of the present invention contains: a plate-shaped molding die 2 that forms an optical element by bringing a glass material 50 into close contact with one surface thereof and has an almost cylindrical through hole 2a as an optical surface-forming part, a holding case 3 that holds the plate-shaped molding die 2 and separates a first space 5 formed at a contact surface side of the plate-shaped molding die 2 with the glass material 50 and a second space 6 formed at a surface side opposite to the contact surface of the plate-shaped molding die 2, and a pressure-controlling part 4 that generates differential pressure in such a way that the second space 6 has a pressure lower than the first space 5 has.

## Description

### TECHNICAL FIELD

The present invention relates to an optical element manufacturing method and manufacturing device, more specifically, to an optical element manufacturing method and manufacturing device capable of forming a convex optical surface in a smooth surface state and in a uniform shape without variation.

### BACKGROUND ART

A microlens for use in an image sensor of a digital camera, a liquid crystal projector, a laser projector for optical communication, and the like is usually employed in the form, so-called microlens array, in which a plurality of microlenses are arranged in a grid pattern or the like.

The microlens array is obtained by sandwiching a glass material for molding between an upper die formed by arranging a plurality of concave surfaces corresponding to the microlens on a mold surface and a lower die whose molding surface is made flat and pressing the glass material to transfer a plurality of the arranged microlens shapes by one molding operation.

The molding surface of the upper die to be used here is formed as a concave surface corresponding to the microlens by pressing a surface of a plate-shaped material, which is to be used as a molding die, with a punching tool whose tip is spherical, and a heated and softened glass material was pressed to the molding die having a molding surface of such a concave surface to manufacture a microlens array having an optical surface having the above molding surface shape (see Patent Document 1).

In addition, in the manufacture of a glass article having a concave part although it is not a microlens array, there is known a method of performing molding by forming a through hole connecting to a molding surface in a molding die and making the pressure within the molding surface negative pressure through the through hole to generate a force for drawing a softened glass toward the molding surface side aiming at equalization of thickness and acquisition of an appropriate surface character (see Patent Documents 2 and 3).

However, in the microlens array described in Patent Document 1, surface roughness of the optical surface thereof is influenced by surface roughness of the concave molding surface that forms the optical surface. In particular, in the case where lens diameter is small, it is difficult to polish the molding surface and hence a sufficiently smooth optical surface has not been obtained. Moreover, in the glass article of Patent Document 2 and the glass molded article of Patent Document 3, although molding is assisted by making the inside of the molding surface negative pressure, the molding surface shape is finally transferred to the glass article or glass molded article and thus, as in Patent Document 1, the surface of the glass article or glass molded article is influenced by the surface roughness of the molding surface. Incidentally, Patent Document 2 relates to a glass article and Patent Document 3 relates to a glass molded article and they are not optical products such as a microlens array, so that the surface roughness of the products is not particularly referred to.

On the other hand, there is known a method of forming a concave part so that the surface of the molding part of a molding die does not come into contact with an optical surface and molding the optical surface as a free surface, without molding a microlens by transfer (see, e.g., Patent Documents 4 and 5).

### BACKGROUND ART DOCUMENTS

### PATENT DOCUMENTS

Patent Document 1: JP-A-11-277543
Patent Document 2: JP-A-2007-131499
Patent Document 3: JP-A-2011-153051
Patent Document 4: JP-A-2007-182372
Patent Document 5: JP-A-2006-111491

### SUMMARY OF THE INVENTION

### PROBLEMS THAT THE INVENTION IS TO SOLVE

However, in these methods of molding without coming into contact with the optical surface, since the glass material is sandwiched with a molding die and pressing pressure of the molding die is utilized, it is difficult to generate uniform pressure over the whole surface of the microlens and there is a problem of generation of variation in individual lens shapes in the case where the pressure becomes non-uniform. Moreover, there arise, for example, problems that the shape does not become symmetric against the surface top part since the pressure escapes to the glass lateral side during the molding by pressing and the control of height of the optical surface becomes difficult since there is a limitation of pressing the glass material to the molding surface.

Accordingly, the present invention is devised for solving such problems and an object of the present invention is to provide an optical element manufacturing method and manufacturing device capable of forming a smooth optical surface shape without reflecting surface roughness of a molding die and easily controlling the height of the optical surface in the manufacture of an optical element and further capable of molding individual lens shapes as uniform shapes in the manufacture of a microlens array.

### MEANS FOR SOLVING THE PROBLEM

The optical element manufacturing method of the present invention comprises: a heating step of bringing a glass material into contact with a plate-shaped molding die having a through hole that is an optical surface-molding part and softening the glass material by heating; a molding step of, after the heating step, generating differential pressure between a first space at a contact surface side of the plate-shaped molding die with the glass material and a second space at a surface side opposite to the contact surface with the glass material of the plate-shaped molding die, in such a way that the second space has a pressure lower than the first space has and bringing the glass material into close contact with the plate-shaped molding die to suck into the through hole, thereby forming a convex optical surface without coming into contact with the plate-shaped molding die; and a cooling step of cooling the glass material that has been formed into a desired shape by the molding step.

The optical element manufacturing device of the present invention comprises: a plate-shaped molding die that forms an optical element by bringing a glass material into close contact with one surface thereof and has an almost cylindrical through hole as an optical surface-forming part; a holding case that holds the periphery of the plate-shaped molding die and is capable of separating a first space formed at a contact surface side of the plate-shaped molding die with the glass material and a second space formed at a surface side opposite to the contact surface with the glass material of the plate-shaped molding die; and a pressure-controlling part that generates differential pressure in such a way that the second space has a pressure lower than the first space has.

### EFFECT OF THE INVENTION

According to the optical element manufacturing method and manufacturing device of the present invention, an optical element having a smooth optical surface can be obtained. Particularly, even in the case of forming such a small-size lens that it is difficult to mirror-polish the molding surface of a molding die, the optical surface can be made smooth and, since the lens height can be easily controlled, an optical element having desired shape and performance can be obtained. Moreover, at the formation of a microlens array, variation in the shape of the microlens can be suppressed and products can be stably manufactured in good yields.

### BRIEF DESCRIPTION OF THE DRAWINGS

[FIG. 1] FIG. 1 is a schematic configuration diagram of an optical element manufacturing device that is one embodiment of the present invention.
[FIG. 2A] FIG. 2A is a diagram showing a modification example of the optical element manufacturing device shown in FIG. 1.
[FIG. 2B] FIG. 2B is a diagram showing another modification example of the optical element manufacturing device shown in FIG. 1.
[FIG. 3A] FIG. 3A is a diagram explaining an optical element manufacturing method using the optical element manufacturing device in FIG. 1.
[FIG. 3B] FIG. 3B is a diagram explaining an optical element manufacturing method using the optical element manufacturing device in FIG. 1.
[FIG. 3C] FIG. 3C is a diagram explaining an optical element manufacturing method using the optical element manufacturing device in FIG. 1.
[FIG. 4] FIG. 4 is a schematic configuration diagram of an optical element manufacturing device that is another embodiment of the present invention.
[FIG. 5] FIG. 5 is a plan view of the plate-shaped molding die used in Example 1.
[FIG. 6] FIG. 6 is a diagram showing an optical surface shape of the optical element obtained in Example 1.
[FIG. 7] FIG. 7 is a diagram explaining an aspect ratio of a lens.
[FIG. 8] FIG. 8 is a diagram showing the relationship between a forming time and an aspect ratio.
[FIG. 9] FIG. 9 is a cross-sectional view of the plate-shaped molding die used in Example 6.
[FIG. 10] FIG. 10 is a plan view of the optical elements obtained in Example 6.
[FIG. 11A] FIG. 11A is a cross-sectional view of the optical element in the central part, obtained in Example 6.
[FIG. 11B] FIG. 11B is a cross-sectional view of the optical element in the peripheral part, obtained in Example 6.
[FIG. 12] FIG. 12 is a schematic configuration view of the optical element manufacturing device used in Comparative Example 1.
[FIG. 13] FIG. 13 is a plan view of the molding surface of the lower die used in Comparative Example 1.
[FIG. 14] FIG. 14 is a diagram showing the optical surface shape of the optical element obtained in Comparative Example 1.

### MODE FOR CARRYING OUT THE INVENTION

The following will explain the present invention with reference to Drawings.

### (First Embodiment)

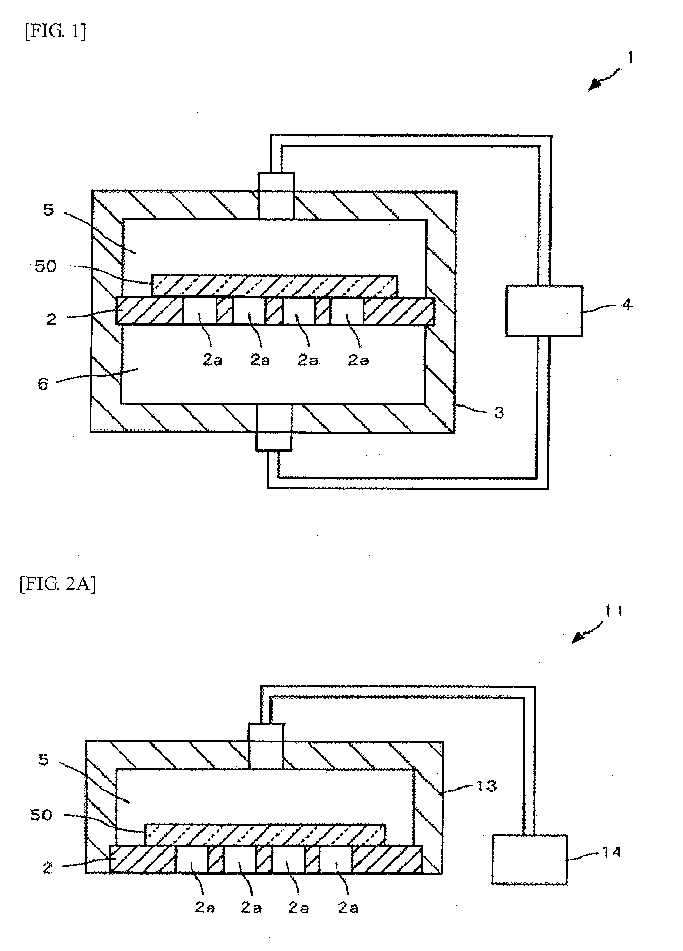

Here, FIG. 1 is a diagram showing a schematic configuration of an optical element manufacturing device that is one embodiment of the present invention. Incidentally, inside of the molding case is shown as a cross-sectional view.

The optical element manufacturing device 1 shown in FIG. 1 comprises a plate-shaped molding die 2 that forms an optical element; a holding case 3 that holds the periphery of the plate-shaped molding die 2 and is capable of forming an airtight space that is separated, by the plate-shaped molding die 2, into a contact surface side of the plate-shaped molding die 2 with the glass material 50 and an opposite surface side thereof; and a pressure-controlling part 4 that generates differential pressure in the airtight space separated by the holding case 3.

The plate-shaped molding die 2 is one for molding an optical element in which a through hole 2a is provided as an optical surface-forming part of the optical element. FIG. 1 exemplifies a microlens array molding die in which a plurality of through holes 2a are provide but the die may be a molding die having one through hole and capable of forming one optical surface. The through hole 2a corresponds to an optical surface-molding part.

At the molding of the optical element, the plate-shaped molding die 2 makes it possible to form a convex optical surface by bringing the glass material 50 for use in the molding into contact with one surface of the die and then bringing it into close contact by utilizing pressure difference to draw (extrude) a portion of the glass material 50 corresponding to the through hole 2a into the through hole 2a without bringing the optical surface into contact with the plate-shaped molding die 2. Therefore, it is sufficient that the opening of the contact surface, with the glass material 50, of the through hole 2a is formed so that the optical surface to be formed has a predetermined diameter. On the other hand, the opening at the opposite side to the contact surface in the plate-shaped molding die 2 is not particularly limited as long as it is formed as a through hole.

Moreover, the inside shape of the through hole 2a is not particularly limited as long as it does not come into contact with the optical surface at the molding. For example, in addition to the case where a typical cylindrical through hole is provided, a draft may be provided so that the through hole 2a is narrowed or widened in a tapered manner from the contact surface that is in contact with the glass material toward the opposite surface side or inner surface cylindrical shapes of the through hole 2a may be cylinders having different sizes in diameter arranged in a multistage. At the time, the slope angle of the draft is preferably from 1 to 10° and more preferably from 4 to 6° against a vertical direction. As above, in the case where the through hole is a through hole having a slope falling within 10° against a vertical direction or a through hole capable of approximating to a slope falling within 10°, the shape of the through hole is defined as an almost cylindrical shape and includes a shape whose slope angle changes in the middle.

In the case where the draft is provide, after pressing, the glass material 50 can be prevented from closely adhering to the plate-shaped molding die 2 and can be easily removed from the die. Moreover, in the case where the hole is gradually narrowed from the contact surface side to the opposite surface side in a tapered manner or as a multistage shape, the opening size can be made small and contamination of foreign substances and the like can be suppressed.

The through hole 2a may have an opening so as to have a diameter of a lens to be formed. For example, in the case of a microlens array molding die, the openings are provided by arranging them in a grid pattern or a staggered arrangement. At the time, the opening size is preferably from 10 to 5,000 µm and the pitch of the opening is preferably from 10 to 20,000 µm. The ratio represented by (diameter/pitch) of the through hole 2a is preferably from 0.1 to 1 and more preferably from 0.2 to 0.9. Incidentally, the pitch of the openings corresponds to the distance between centers of the openings of neighboring through holes 2a.

The present invention exhibits a particularly preferable effect in the case where the opening size is small as in the case of the microlens array and the mirror polishing of the molding surface is difficult in the conventional molding die. While details will be mentioned later, according to the present invention, since the optical surface is not formed by transferring the molding surface, it is unnecessary to perform an operation of mirror polishing or the like of the molding surface and nonetheless a smooth surface is obtained.

The holding case 3 holds the periphery of the plate-shaped molding die 2 and separates a first space 5 formed at a contact surface side, with the glass material, of the plate-shaped molding die 2, and a second space 6 formed at an opposite surface side to the above contact surface. FIG. 1 shows an example of the case where the glass material is molded with bringing it into close contact with the upper surface of the plate-shaped molding die 2.

It is sufficient that the holding case 3 is one that can hold the plate-shaped molding die 2 so as to be horizontally and can spatially separate the upper part and the lower part of the plate-shaped molding die 2 at the molding. Moreover, for generating differential pressure in the separated space as mentioned later, FIG. 1 shows an example in which both spaces of the first space 5 and the second space 6 become closed spaces.

The pressure-controlling part 4 controls the pressure of the first space 5 and the pressure of the second space 6 as mentioned above and is connected to the inside of the first space 5 and the inside of the second space 6, so that the air pressure in the inside of each space can be controlled. At the time, differential pressure is generated by the pressure-controlling part 4 so that the space (second space 6) at the opposite surface side has a pressure lower than that of the space (first space 5) at the contact surface side, with the glass material 50, of the plate-shaped molding die 2.

Specifically, for pressurization of the pressure of the first space 5, a pressurizing pump or the like is used and, for reducing the pressure of the second space 6, a vacuum pump or the like is used, thereby controlling the differential pressure between the both spaces so as to be a predetermined value.

Incidentally, the optical element manufacturing device 1 in FIG. 1 is shown in the case where both of the first space 5 and the second space 6 become in a closed state. However, since it is sufficient to generate differential pressure between both spaces, the device may have a structure in which either one is a closed space and the other is opened. In this case, since the opened space has atmospheric pressure, whether the pressure of the closed space is made negative pressure or positive pressure is naturally determined depending on a decision which space is closed.

That is, in the case where the first space 5 is closed and the second space 6 is opened, the case has a device configuration shown in FIG. 2A. The optical element manufacturing device 11 shown in FIG. 2A comprises a plate-shaped molding die 2 that forms an optical element; a holding case 13 that holds the periphery of the plate-shaped molding die 2 and separates spaces formed at a contact surface side with the glass material 50 of the plate-shaped molding die 2 and at an opposite surface side thereof; and a pressure-controlling part 14 that generates differential pressure between the spaces separated by the holding case 13.

Here, the holding case 13 closes the first space 5 and make the second space 6 opened state. Since the second space 6 has atmospheric pressure, it is necessary to control the first space 5 to a pressure higher than atmospheric pressure. Therefore, as the pressure-controlling part 14 to be used here, there may be mentioned a pressurizing pump or the like that can pressurize inside of the first space 5.

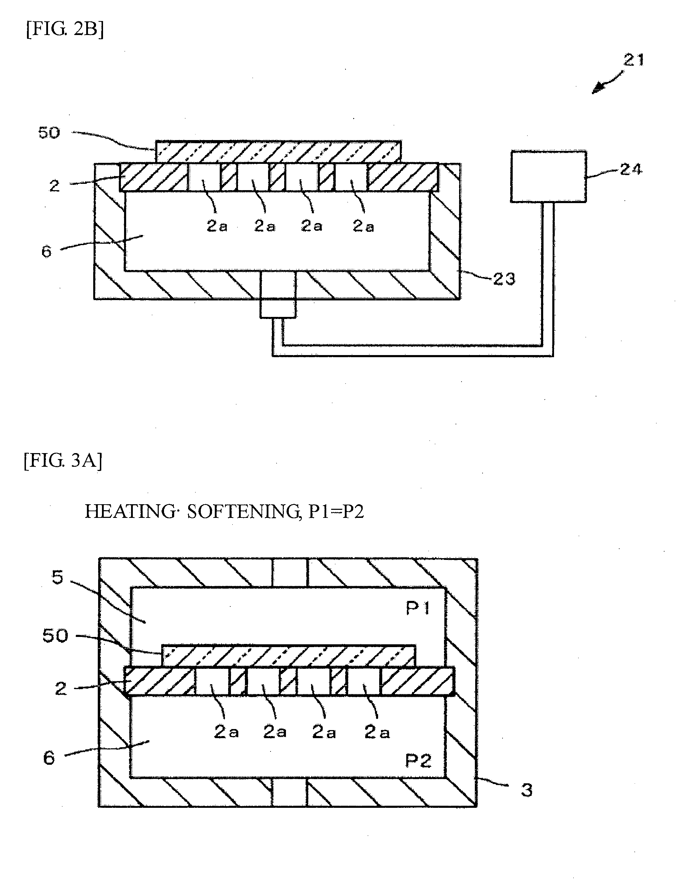

In the case where the second space 6 is closed and the first space 5 is opened, the case has a device configuration shown in FIG. 2B. The optical element manufacturing device 21 shown in FIG. 2B comprises a plate-shaped molding die 2 that forms an optical element; a holding case 23 that holds the periphery of the plate-shaped molding die 2 and separates spaces formed at a contact surface side with the glass material 50 of the plate-shaped molding die 2 and at an opposite surface side thereof; and a pressure-controlling part 24 that generates differential pressure between the spaces separated by the holding case 23.

Here, the holding case 23 opens the first space 5 and makes the second space 6 closed state. Since the first space 5 has atmospheric pressure, it is necessary to control the second space 6 to a pressure lower than atmospheric pressure. Therefore, as the pressure-controlling part 24 to be used here, there may be mentioned a vacuum pump or the like that can reduce the pressure of inside of the second space 6.

As the material of the plate-shaped molding die 2, it is sufficient to use a known material as an optical element molding die, such as stainless steel, synthetic quartz, or cemented carbide (cemented carbide alloy). Moreover, in the case where, as a material of the plate-shaped molding die 2, synthetic quartz is used as a base body, surface coating may be performed for improving mold releasing ability of glass. As a coating material, for example, DLC (diamond like carbon) may be mentioned. Furthermore, in the case of using DLC as surface coating, a structure having an intermediate layer between DLC and synthetic quartz may be adopted. In the case where chromium is used as the intermediate layer for example, adhesiveness between DLC and synthetic quartz can be enhanced. Incidentally, as synthetic quartz, it is sufficient to use one having a high melting point and capable of satisfying a low thermal expansion coefficient. Also, it is sufficient that the material of the holding case 3 is one having durability against temperature and pressure at the molding of the optical element and, for example, stainless steel, cemented carbide, and the like may be mentioned.

Next, the optical element manufacturing method of the present invention is explained with reference to FIGs. 3A to 3C. FIGs. 3A to 3C show an example of the case of using the optical element manufacturing device 1 in FIG. 1, and description of the pressure-controlling part 4 is omitted.

First, a glass material 50 is placed on the plate-shaped molding die 2 in FIG. 1. Then, a heating step is performed where the plate-shaped molding die 2 is heated to molding temperature and the glass material 50 is also heated to the same temperature to soften it (FIG. 3A). The heating temperature at the time is sufficiently a temperature at which the glass material 50 is softened and, although it varies depending on the used glass material, is generally from about 500 to 1,100°C. At the time, it is sufficient that, when the viscosity of the glass material is taken as η [dpa· s], log η is controlled to be a range of, for example, 4.86 to 12.37, preferably from 5 to 9, and more preferably from 5 to 7.

Subsequently, after the glass material 50 is sufficiently heated and becomes in a softened state, differential pressure is generated so that, as the relationship between the pressure (P1) of the inside of the first space 5 and the pressure (P2) of the inside of the second space 6, the second space 6 has a pressure lower than the first space 5 has (P1>P2).

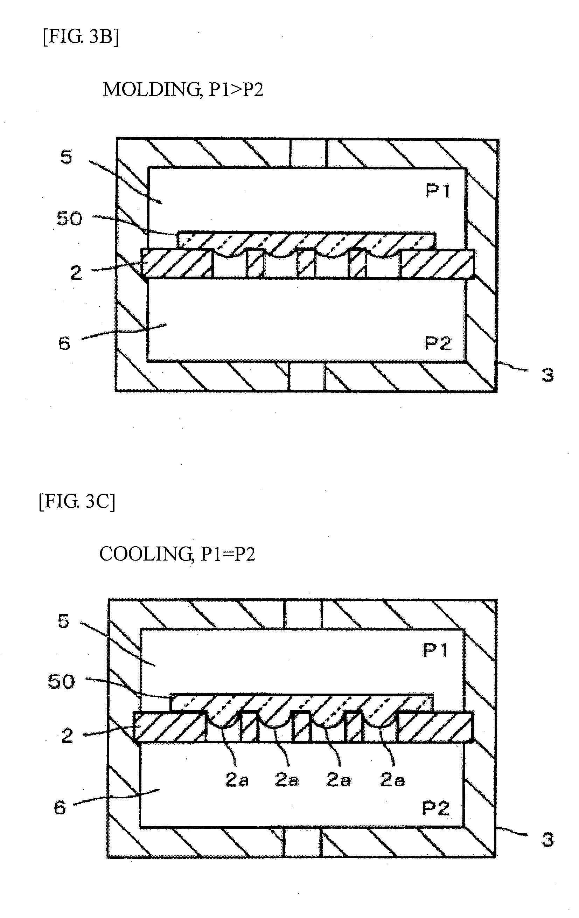

When differential pressure is generated as above, the glass material 50 in a softened state is sucked (extruded) to the low-pressure second space 6 side through the through hole 2a and the first space 5 and the second space 6 are surely separated from each other and closed. When the state is continued, a molding step is performed where the glass material 50 is sucked to inside of the through hole 2a to form a convex optical surface (FIG. 3B).

At the time, surface top height of the optical surface of the optical element is determined depending on the relationship of the viscosity of the glass material 50, the differential pressure (P1-P2) between the first space 5 and the second space 6, and the forming time, and therefore they are set at conditions under which a desired optical surface shape is obtained. For example, in the case where the viscosity and the differential pressure are made constant, the height of the optical surface can be easily controlled by controlling the sucking time.

More specifically, the differential pressure (P1-P2) between the first space 5 and the second space 6 at the molding is preferably from 10 to 1,000 kPa and more preferably from 90 to 800 kPa for achieving the deformation of the glass material 50 sufficiently within a practical period of time. Moreover, time for deforming the glass material by the differential pressure preferably ranges from 1 to 1,000 seconds and more preferably from 1 to 150 seconds so that functions as an optical element are not impaired and in consideration of manufacturing efficiency.

When the optical surface becomes a desired shape, the differential pressure between the first space 5 and the second space 6 is cancelled to make the pressure of the first space 5 and the pressure of the second space 6 equal so that the glass material 50 is no more deformed.

Then, the glass material 50 is solidified by a cooling step where the deformed glass material 50 is cooled to a strain point or lower (FIG. 3C). Furthermore, the cooled glass material 50 is released from the molding die and finally cooled to room temperature to obtain a microlens array. As above, there is obtained a microlens array in which spherical microlenses are arranged at equal intervals in a grid pattern. Incidentally, in the case where the thermal expansion coefficient of material of the plate-shaped molding die 2 and the thermal expansion coefficient of the glass material 50 are about the same, the glass material may be integrally cooled with the plate-shaped molding die 2 and solidified and then released from the plate-shaped molding die 2 to obtain the microlens array.

The thus obtained microlens array has a convex spherical shape and one having a radius of curvature R ranging from 0.005 to 100 mm can be obtained as a desired shape by controlling the above molding conditions.

Moreover, the molding is performed in a heated state at a high temperature. In order to prevent deterioration of the molding die due to oxidation, it is preferable to make, for example, both of the first space 5 and the second space 6 inert gas atmosphere such as nitrogen or argon or to control the second space 6 side (low pressure side) under a vacuum condition of 1 x 10⁻² Pa or lower.

Furthermore, a chamber capable of accommodating the plate-shaped molding die 2 and the holding case 3 inside thereof (it is sufficient to place the pressure-controlling part 4 outside the chamber) may be provided. In this case, replacement of the atmosphere of the above molding die is easy and inner temperature can be stabilized, so that the case is preferable.

Incidentally, the glass material 50 is not particularly limited as long as the optical element can be manufactured and there may be mentioned glass materials that have hitherto been used for optical elements. The shape of the glass material 50 is not particularly limited but a flat one having a rectangular or circular planar shape is preferred and, at that time, thickness before pressing is from 0.1 mm to 20 mm. Moreover, as the glass material, it can be used not only the above flat ones but also variously shaped ones such as flattened ones in which spherical ones are pressed.

### (Second Embodiment)

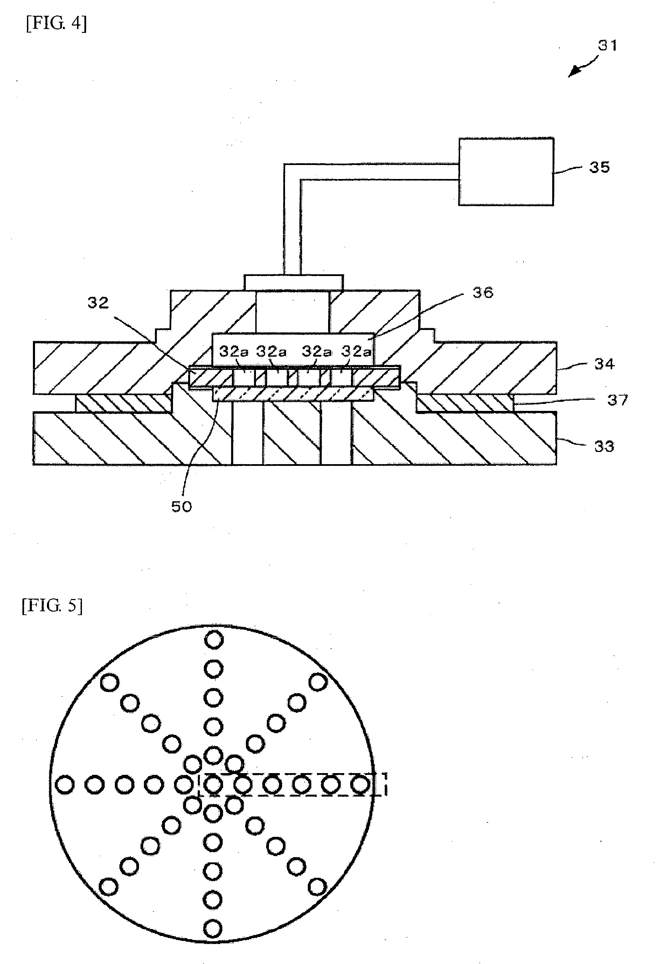

FIG. 4 is a diagram showing a schematic configuration of an optical element manufacturing device that is another embodiment of the present invention.

The optical element manufacturing device 31 shown in FIG. 4 comprises a plate-shaped molding die 32 that forms an optical element; a holding cases 33, 34 that hold the periphery of the plate-shaped molding die 32 and are capable of forming a space that is separated into a contact surface side of the plate-shaped molding die 32 with the glass material and an opposite surface side thereof; and a pressure-controlling part 35 which generates differential pressure in the space separated by the holding cases 33, 34. In addition, a gasket 37 is also provided in order to make the space formed by the holding cases 33, 34 capable of being airtight.

Here, for the plate-shaped molding die 32, materials the same as in the case of the plate-shaped molding die 2 in the first embodiment can be used and hence explanation thereof is omitted. Moreover, the present embodiment is an example in which the glass material 50 is brought into contact from the lower part of the plate-shaped molding die 32 and then is brought into close contact therewith. In the embodiment, the holding case is separated into two parts of the lower holding case 33 and the upper holding case 34, and the glass material 50 and the plate-shaped molding die 32 are accommodated in a space formed at the center when the holding cases 33, 34 are overlaid.

In the example shown in FIG. 4, the lower holding case 33 is configured such that level differences are provided so that the glass material 50 and the plate-shaped molding die 32 can be disposed at predetermined positions and further, a hole 32a connecting to an outer space is provided on the surface on which the glass material 50 is placed and the first space is opened and has atmospheric pressure. On the other hand, the second space 36 at the opposite surface side to the contact surface of the plate-shaped molding die 32 with the glass material 50 is made as a closed space. The second space 36 is connected to a pressure-controlling part 35 and can be controlled to be negative pressure by reducing the air pressure of the inside.

The optical element manufacturing device 31 explained here can manufacture an optical element by operations fundamentally the same as in the first embodiment except that the glass material 50 is brought into close contact from the lower side of the plate-shaped molding die 32 and is molded. As the device configuration, it has a configuration in which the optical element manufacturing device 21 shown in FIG. 2B is turned upside down and a supporting member is provided so that the glass material 50 and the plate-shaped molding die 32 do not fall downward.

### EXAMPLES

The following will describe the present invention in further detail with reference to Examples (Example 1 to Example 6) and Comparative Example (Example 7).

### (Example 1)

By using the optical element manufacturing device in FIG. 4, a microlens array was manufactured as follows.

The plate-shaped molding die for use in the present Example is a disk-shaped molding die made of a stainless steel having a diameter of 20 mm and a thickness of 3 mm (SUS316; thermal expansion coefficient α: 161×10⁻⁷/K (at up to 200°C). A plan view thereof is shown in FIG. 5. Here, there was used a molding die for test in which 41 pieces of through holes each having a diameter of 0.87±0.05 mm were radially formed at a pitch of 1.5 mm.

As shown in FIG. 4, as a holding case, the plate-shaped molding die and the glass material were accommodated inside, an upper space of the plate-shaped molding die is closed, and a lower space (first space) thereof accommodates the glass material and is spatially opened. Moreover, the upper space (second space) is connected to a vacuum pump.

First, the glass material was placed on the center of the lower holding case, and the plate-shaped molding die was further placed thereon. The case was capped with the upper holding die from the above so as to be able to separate the upper and lower spaces of the plate-shaped molding die. Incidentally, the glass material used here is a disk-shaped one having a diameter of 15.95 mm and a thickness of 4.4 mm, which is made of barium borosilicate-based low melting point glass (glass transition point: 495°C, yield point: 542°C, softening point: 591°C, manufactured by Asahi Glass Co., Ltd., trade name: R1B).

Then, the holding case was heated and thereby the glass material was heated to 564°C and softened. When viscosity of the glass material at the time is taken as η [dpa· s], log η is 9.04. After the glass material was sufficiently heated and softened, a vacuum pump was operated to make the upper space (second space) negative pressure and the state was kept for 200 seconds to deform the glass material, thereby molding an optical surface shape. Incidentally, differential pressure at the time was 90 kPa.

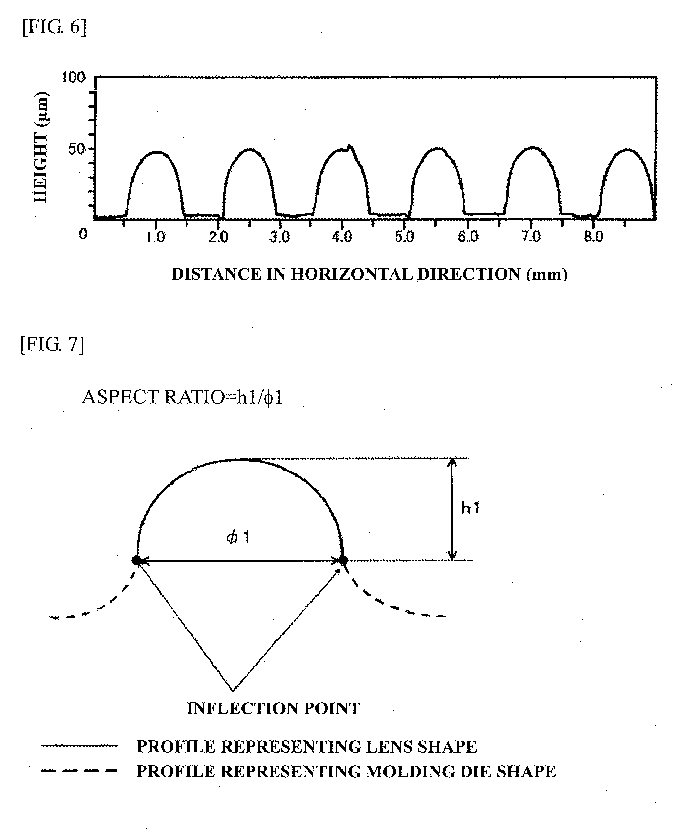

Thereafter, the pressure of the upper space was immediately released and further, the holding case was cooled and returned to room temperature, thereby solidifying the molded glass material. The obtained glass molded article was taken out, and molding surface shapes of the optical surfaces corresponding to the part shown by the dotted line in FIG. 5 were measured on a non-contact three-dimensional measuring instrument (manufactured by Mitaka Kohki Co., Ltd., trade name: NH3-MAS). FIG. 6 shows the obtained results.

From FIG. 6, it has been realized that optical surfaces having a smooth surface shape can be formed without being influenced by surface roughness of the molding surfaces. Moreover, it has been realized that uniform optical surface shapes can be formed with extremely small variation in shape between at the central part and at the outer circumference of the molding die.

### (Examples 2 to 5)

Next, as a disk-shaped molding die, there was used a molding die for test in which 33 pieces of through holes (the outermost part of the through holes provided concentrically in FIG. 5 is not formed) each having a diameter of 0.75±0.04 mm were formed at a pitch of 1.5 mm, which has a similar shape in which the through holes were radially formed in eight directions similarly to Example 1.

By using the molding die for test, optical surface shapes were molded in the same manner as in Example 1 except that conditions were changed as described in Table 1.

**[Table 1]**

| | Example 1 | Example 2 | Example 3 | Example 4 | Example 5 |
|---|---|---|---|---|---|
| Heating time [min] | 80 | 70 | 70 | 70 | 60 |
| Molding temperature [°C] | 564 | 603 | 602 | 584 | 602 |
| Viscosity [log η] | 9.04 | 7.15 | 7.20 | 8.07 | 7.20 |
| Differential pressure at molding [kPa] | 90 | 88 | 88 | 88 | 88 |
| Molding time [s] | 200 | 90 | 100 | 100 | 40 |
| Evaluation diameter φ1 [mm] | 0.88 | 0.79 | 0.79 | 0.77 | 0.76 |
| Height h1 [mm] | 0.044 | 0.42 | 0.46 | 0.11 | 0.18 |
| Aspect ratio | 0.050 | 0.53 | 0.58 | 0.14 | 0.24 |
| Curvature [mm] | 3.7 | 0.43 | 0.40 | 1.05 | 0.64 |

Incidentally, the evaluation diameter φ1, the height h1, and the curvature in Table 1 are results obtained by calculation through averaging measurement results on five pieces, i.e., one microlens at the center and four microlenses (four corners) at the endmost parts among the peripheral parts in FIG. 5. The aspect ratio is calculated from the height and diameter of each of the lenses of the obtained microlens array, according to the figure and expression explained in FIG. 7. Incidentally, the measurement positions of the height and diameter of the lens are determined on the basis of the infection point in a profile representing the lens shape of the deformed glass material and a profile representing the molding die shape as shown in FIG. 7.

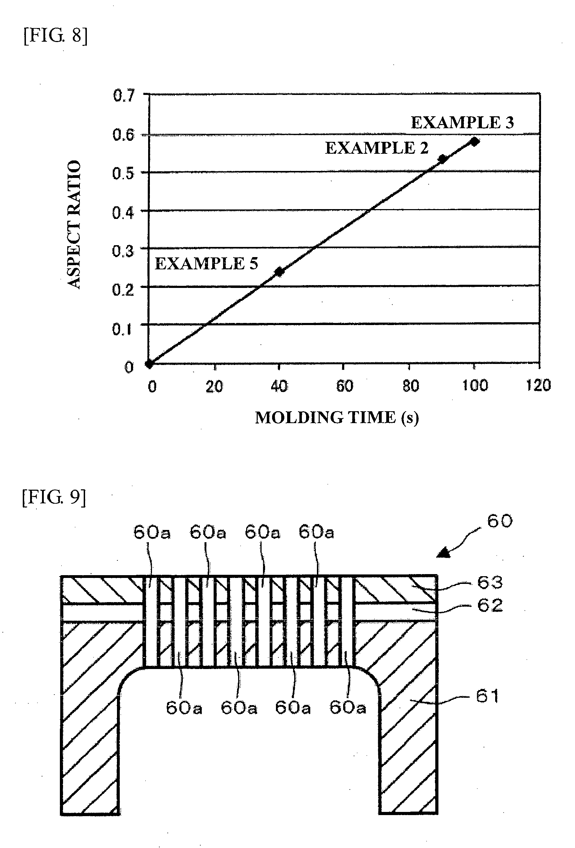

Here, FIG. 8 shows the relationship between the molding time and the aspect ratio for Examples 2, 3, and 5. From the figure, it has been realized that the molding time and the aspect ratio of the lens shape to be formed are in proportional relation and it has been realized that control to a desired lens shape is achieved by adjusting the molding time after the manufacturing conditions are standardized.

### (Example 6)

In the present Example, a plate-shaped molding die 60 shown as a schematic view of cross-section in FIG. 9 was used. Here, the plate-shaped molding die 60 has an intermediate layer 62 composed of a synthetic quartz substrate 61 having a thickness of about 1 mm and Cr having a thickness of about 0.3 µm formed thereon and also has a coating layer 63 having a thickness of about 1.0 µm and composed of DLC on the intermediate layer 62. By machining, 8 pieces×8 pieces (64 pieces in total) of through holes 60a each having a diameter of 45.24±2.30 µm are formed in a grid pattern at a pitch of 0.1 mm. Moreover, processing is performed beforehand so that thickness of the synthetic quartz substrate 61 at the parts where the through holes 60a are present is thinner than that of the peripheral part (thickness: about 1.0 mm) and is about 0.2 mm. Furthermore, the thermal expansion coefficient α of the plate-shaped molding die 60 used in the present Example was 5.0×10⁻⁷/K (at up to 200°C).

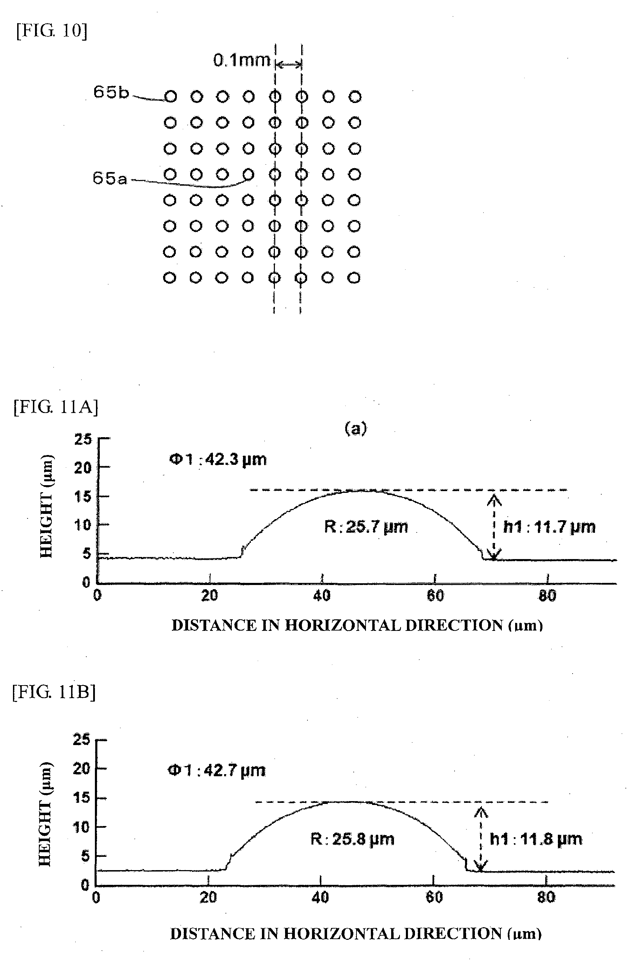

By using the plate-shaped molding die 60, a microlens array was molded as in example 1 under conditions shown in Table 2 by using the optical element manufacturing device in FIG. 4. Moreover, table 2 shows results obtained under the conditions. The molding surface shape was measured on a non-contact three-dimensional measuring instrument (manufactured by Keyence, trade name: VK9700). Incidentally, the evaluation diameter φ1, the height h1, and the curvature in Table 2 are results obtained by calculation through averaging measurement results on five pieces, i.e., one microlens at the center (corresponding to 65a) in FIG. 10 and four microlenses (four corners) at the endmost parts including 65b among the peripheral parts.

**[Table 2]**

| | Example 6 |
|---|---|
| Heating time [min] | 30 |
| Molding temperature [°C] | 591 |
| Viscosity [log η] | 7.74 |
| Differential pressure at molding kPa] | 88 |
| Molding time [s] | 90 |
| Evaluation diameter φ1 [mm] | 0.0423 |
| Height h1 [mm] | 0.0117 |
| Aspect ratio | 0.27 |
| Curvature [mm] | 0.0257 |

FIG. 10 shows a plan view of the optical element obtained in the present Example. In FIG. 10, a microlens at the central part was shown as 65a and a microlens at the peripheral part was shown as 65b. Moreover, FIGs. 11A and 11B show cross-sectional views of these microlenses, and FIG. 11A shows a cross-sectional view of the microlens 65a at the central part and FIG. 11B shows a cross-sectional view of the microlens 65b at the peripheral part. Here, the microlens 65a at the central part had an evaluation diameter φ1 of 0.0423 [mm], a height h1 of 0.0117 [mm], and a curvature (R) of 0.0257 [mm]. The microlens 65b at the peripheral part had an evaluation diameter φ1 of 0.0427 [mm], a height h1 of 0.0118 [mm], and a curvature (R) of 0.0258 [mm]. Thus, it has been realized that uniform optical surface shapes can be formed with extremely small variation in microlens shape between at the central part and at the outer circumference of the molding die.

### (Example 7: Comparative Example)

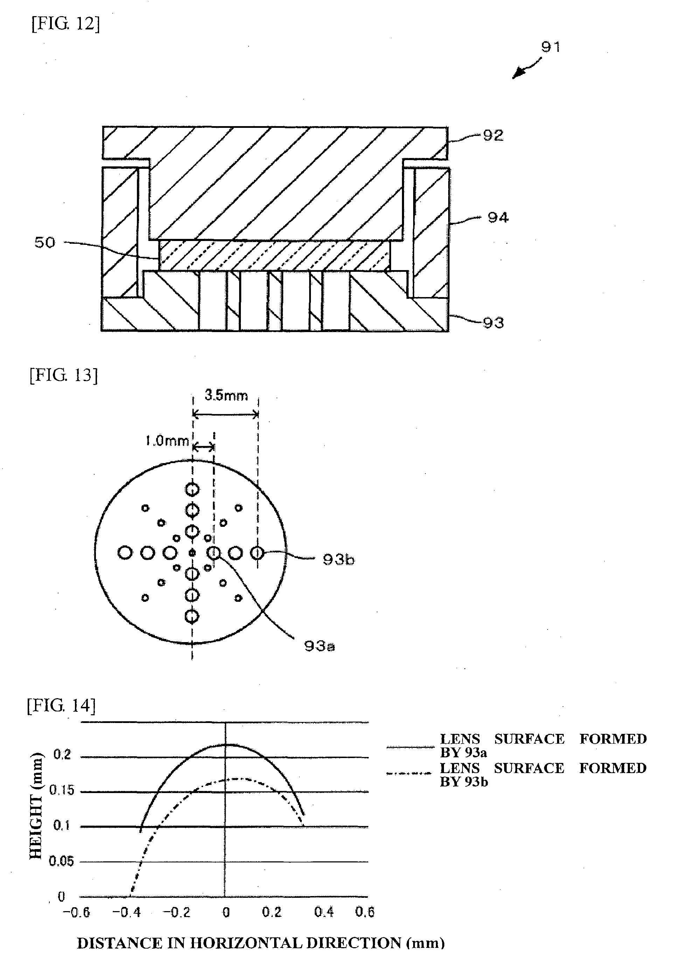

As a conventional method, an optical element was molded by a pressing method using the device shown in FIG. 12. FIG. 12 is a diagram showing an optical element manufacturing device 91 for pressing, composed of an upper die 92, a lower die 93, and a sleeve 94.

FIG. 13 shows a plan view of the molding surface of the lower die 93 used here. The lower die 93 has 12 pieces of through holes having a diameter of 0.77 mm, which is formed in a cross-shape, and 13 pieces of through holes having a diameter of 0.05 mm, which are formed in an X-shape. Here, in the through holes having a diameter of 0.77 mm, a through hole at the vicinity of the center is taken as 93 a and a through hole at the outermost part is taken as 93b. By using the molding die, a glass material was extruded into the through holes for molding by applying pressure from above and below to form optical surfaces. As the glass material, a disk-shaped one having a diameter of 12 mm and a thickness of 6.3 mm was used, which was made of a barium borosilicate-based low melting point glass (glass transition point: 495°C, yield point: 542°C, softening point: 591°C, manufactured by Asahi Glass Co., Ltd., trade name: R1B).

After the glass material was heated to 560°C and was sufficiently softened, it was pressed with the molding die from above and below. At the time, pressing was conducted under a pressure of 3x 10² kPa for 50 seconds. Also, displacement magnitude at the pressing was set 2,600 µm.

After the pressing operation was completed, the glass material was thoroughly cooled and solidified. The obtained glass molded article was taken out and the molding surface shape was measured on a non-contact three-dimensional measuring instrument (manufactured by Mitaka Kohki Co., Ltd., trade name: NH3-MAS). FIG. 14 shows the obtained results.

In FIG. 14, shapes of the molding surface at the central side formed with the through hole 93a and the molding surface of the outermost part formed with the through hole 93b were shown with overlaying them. From the results, an optical surface having a smooth surface shape can be formed independent of the surface roughness of the molding surface. However, while the maximum height of the molding surface was 0.22 mm at the central side, the maximum height became 0.17 mm at the outermost circumference part. In FIG. 14, the molding surface shape was displayed with fitting the center between the inflection points in the aspect ratio explained in FIG. 7 to 0 position. With regard to the shape, the surface top part is present at 0 position in the case of one at the central part and almost symmetric spherical shape was obtained but, at the outermost circumference part, the surface top part is present in a position of 0.049 mm and thus an asymmetric shape approaching to the outer circumference side was formed. Therefore, it has been realized that variation in shape between at the central part and at the outer circumference part is prone to generate by the pressing method.

Accordingly, the optical element manufacturing method and manufacturing device of the present invention can afford an optical element having a smooth optical surface by simple and convenient operations. On that occasion, the height of the optical surface can be easily controlled, so that the method is a useful method. Furthermore, in the manufacture of a microlens array and the like, it has been realized that the method and device are useful for eliminating variation in shape of individual microlenses and for manufacturing an optical element having homogeneous properties.

While the present invention has been described in detail and with reference to specific embodiments thereof, it will be apparent to one skilled in the art that various changes and modifications can be made therein without departing from the spirit and scope thereof.

The present application is based on Japanese Patent Application (No. 2011-183976) filed on August 25, 2011, and the contents thereof are incorporated herein by reference.

### INDUSTRIAL APPLICABILITY

The optical element manufacturing method and manufacturing device of the present invention can be widely used for manufacturing an optical element having a convex optical surface and, particularly, they are useful for forming an optical element such as a microlens array.

### DESCRIPTION OF REFERENCE NUMERALS AND SIGNS

1 ... Optical element manufacturing device, 2 ... Plate-shaped molding die, 3 ... Holding case, 4 ... Pressure-controlling part, 50 ... Glass material

## Claims

1. An optical element manufacturing method comprising:
a heating step of bringing a glass material into contact with a plate-shaped molding die having a through hole that is an optical surface-molding part and softening the glass material by heating,
a molding step of, after the heating step, generating differential pressure between a first space at a contact surface side of the plate-shaped molding die with the glass material and a second space at a surface side opposite to the contact surface with the glass material of the plate-shaped molding die, in such a way that the second space has a pressure lower than the first space has and bringing the glass material into close contact with the plate-shaped molding die to suck into the through hole, thereby forming a convex optical surface without coming into contact with the plate-shaped molding die, and
a cooling step of cooling the glass material that has been formed into a desired shape by the molding step.

2. The optical element manufacturing method according to claim 1, wherein the first space is made atmospheric pressure and the second space is made negative pressure in the molding step.

3. The optical element manufacturing method according to claim 1, wherein the first space is made positive pressure and the second space is made atmospheric pressure in the molding step.

4. The optical element manufacturing method according to any one of claims 1 to 3, wherein the differential pressure is from 10 to 1,000 kPa.

5. The optical element manufacturing method according to any one of claims 1 to 4, wherein, when viscosity of the glass material is taken as η [dpa· s], log η is controlled to be from 4.86 to 12.37 in the heating step.

6. The optical element manufacturing method according to any one of claims 1 to 5, wherein the optical element is a microlens array.

7. The optical element manufacturing method according to any one of claims 1 to 6, wherein the plate-shaped molding die is a molding die using a synthetic quartz as a base body.

8. An optical element manufacturing device comprising:
a plate-shaped molding die that forms an optical element by bringing a glass material into close contact with one surface thereof and has an almost cylindrical through hole as an optical surface-forming part,
a holding case that holds the periphery of the plate-shaped molding die and is capable of separating a first space formed at a contact surface side of the plate-shaped molding die with the glass material and a second space formed at a surface side opposite to the contact surface with the glass material of the plate-shaped molding die, and
a pressure-controlling part that generates differential pressure in such a way that the second space has a pressure lower than the first space has.

9. The optical element manufacturing device according to claim 8, wherein the pressure-controlling part is a vacuum pump which is connected to the second space.

10. The optical element manufacturing device according to claim 8, wherein the pressure-controlling part is a pressurizing pump which is connected to the first space.

11. The optical element manufacturing device according to any one of claims 8 to 10, wherein the plate-shaped molding die is a microlens array molding die having a plurality of the through holes.

12. The optical element manufacturing device according to any one of claims 8 to 11, wherein the plate-shaped molding die is a molding die using a synthetic quartz as a base body.
